# EUROPÄISCHE PATENTSCHRIFT

(11) **EP 3 455 529 B1**
(45) Veröffentlichungstag und Bekanntmachung des Hinweises auf die Patenterteilung: **01.07.2020**
(21) Anmeldenummer: 17722470.6
(22) Anmeldetag: 11.05.2017
(51) Int. Cl.: F16K 27/02, B60S 1/48, F16K 31/00, G05D 23/00

(54) **THERMOVENTIL**
THERMOVALVE
SOUPAPE THERMOSTATIQUE

(30) Priorität: 12.05.2016 IT UA20163374
(43) Veröffentlichungstag der Anmeldung: 20.03.2019
(73) Patentinhaber: AUTOTEST SUEDTIROL SRL, 39045 Fortezza/Mezzaselva (IT)
(72) Erfinder: STAFFA, Franco, 39011 Lana (IT)
(74) Vertreter: Ausserer, Anton
(86) Internationale Anmeldenummer: PCT/EP2017/061336
(87) Internationale Veröffentlichungsnummer: WO 2017/194678

(56) Entgegenhaltungen:
- EP-A1- 2 743 552
- DE-A1-102004 042 210
- DE-A1-102013 010 432
- US-A1- 2005 230 424

## Beschreibung

Die vorliegende Erfindung bezieht sich auf ein Thermoventil gemäß dem Oberbegriff des Anspruchs 1.

Ein Thermoventil dieser Art dient dazu, einen Fluidfluss je nach Raumtemperatur, zum Beispiel eines Kraftfahrzeuges zu verbinden und zu unterbrechen.

Ventile bekannter Art weisen das Problem auf, aus zahlreichen kompliziert und unter Verwendung von viel Material zusammen zu bauenden Bestandteilen zu bestehen.

Aus der US 2005230424 ist auch eine Vorrichtung zum Öffnen und Schließen einer in einem Gehäuse vorgesehenen Durchlassöffnung bekannt. Das Gehäuse der Vorrichtung weist einen zur Durchlassöffnung führenden Zuführkanal und einen auf die Durchlassöffnung folgenden Auslasskanal auf, mit einem Schließkörper, der die Durchlassöffnung öffnet und schließt und die Durchflussmenge bestimmt und ein Heizmediums, das zum Erwärmen eines die Vorrichtung umgebenden Mediums vorgesehen ist.

In der deutschen Patentanmeldung DE 40 30 383 ist ein von der Temperatur abhängiges Arbeitselement mit einem Gehäuse, einem in einem Hohlraum im Gehäuse enthaltenen, bei Erwärmung dehnbaren Material, einem im Gehäuse geführten und im dehnbaren Material bei dessen Dehnung verstellbaren Kolben und einem Heizelement beschrieben, das dazu dient das dehnbare Material zu erhitzen. Das Heizelement ist ein elastisches Element aus einem elektrisch leitbaren Kunststoff, zum Beispiel einem Thermoplasten, der durch elektrische Energie gespeist und daher gedehnt werden kann und in ihm eingeschlossene, insbesondere dispergierte, leitfähige Teilchen aus leitfähigem Metall enthält.

Ein Arbeitselement dieser Art, vor allem zum Beispiel ein Sensor, greift elektrisch ein, sobald der zu überwachende Raum oberhalb einer bestimmten Temperatur erhitzt wird. Überdies erfordert ein derartiges Arbeitselement ein dehnbares Material, das durch Strom erhitzt wird. Das Arbeitselement dieser Anmeldung ist sehr kompliziert und schwierig zu montieren.

Aus EP 2 778 408 ist ein Thermoventil bekannt, das ein Gehäuse, einen Verschluss, einen den Verschluss aufnehmende Sitz, im Gehäuse ausgenommene Fluideingangs-/Ausgangsleitungen und eine Verbindungsleitung umfasst, welche die Eingangs-/Ausgangsleitungen verbindet und mit der Aufnahme versehen ist. Der Verschluss ist im Sitz drehbar aufgenommen und weist an seinem Kopf eine Ausnehmung auf, um in einer ersten Stellung die Verbindungsleitung mit einer der Eingangs-/Ausgangsleitungen strömungsmäßig zu verbinden und in einer zweiten Stellung die Strömung zwischen der Verbindungsleitung und den Eingangs-/Ausgangsleitungen zu unterbrechen, wobei der Verschluss dazu belastet ist, durch eine zwischen dem Verschluss und dem Gehäuse gespannte Spiralfeder geschwenkt zu werden.

Das Problem, das sich durch die Verwendung des Ventils stellt, liegt darin, dass die Schwenkbewegung nicht immer eine optimale Schließung der Leitung erlaubt.

In der europäischen Patentanmeldung EP 2 743 552 A1 ist ein Ventil mit einem Gehäuse mit einem Fluideinlass und einem Fluidauslass geoffenbart, wobei der Fluideinlass mit dem Fluidauslass über eine Strömungskammer innerhalb des Gehäuses in Verbindung steht und der Fluiddurchsatz durch die Strömungskammer durch einen im Inneren des Gehäuses beweglich gelagerten Kolben beeinflussbar ist, wobei an einer ersten Angriffsfläche des Kolbens ein entlang seiner Hauptbewegungsrichtung wirkendes erstes Stellglied und an einer zweiten Angriffsfläche des Kolbens ein entlang seiner Hauptbewegungsrichtung wirkendes zweites Stellglied angreift, wobei die Wirkrichtung des ersten Stellgliedes und die Wirkrichtung des zweiten Stellgliedes entgegengesetzt sind und wobei das erste Stellglied aus einer Formgedächtnis-Legierung gebildet ist, wobei das Gehäuse ein erstes Heizelement aufweist, welches im Bereich des ersten Stellgliedes im und/oder am Gehäuse angeordnet und das erste Stellglied durch das Heizelement erwärmbar ist.

In dieser Veröffentlichung ist daher der Verschluss durch einen innerhalb des Gehäuses geradlinig verstellbaren Kolben gebildet, der durch zwei an abgewandten Seiten des Kolbens angeordnete Stellglieder beaufschlagt ist.

In der italienischen am 26.05. 2015 hinterlegten Patentanmeldung Nr. 10 201 50000 17 882 derselben Anmelderin ist ein Thermoventil beschrieben, umfassend ein Gehäuse, einen Verschluss, einen den Verschluss aufnehmenden Sitz, im Gehäuse ausgenommene Eingangs/Ausgangsleitungen für ein Fluid und eine die Eingangs/Ausgangsleitung verbindende und mit dem Sitz versehene Verbindungsleitung.

Der Verschluss ist im Sitz verstellbar aufgenommen, weist eine Aufnahme für eine Gedächtnisfeder auf, ist in einer ersten Position durch ein erstes zwischen dem Verschluss und dem Gehäuse zwischengeschaltetes Federelement gehalten, um die Verbindungsleitung mit einer der Eingangs/Ausgangsleitungen strömungsmäßig zu verbinden und in einer zweiten Position den Fluss zwischen der Verbindungsleitung und den Eingangs-/Ausgangsleitungen zu unterbrechen, wobei der Verschluss durch eine Gedächtnisfeder belastet ist.

Ein weiteres Thermoventil ist aus DE 10 2013 010 432 A1 bekannt.

Eines der größten Probleme, die sich in den Vor-Veröffentlichungen des Standes der Technik stellen, besteht darin, dass die Bestandteile zur Abdeckung des Verschlusses, insbesondere eines Kolbens, innerhalb einer Verbindungssitzes zwischen einem Eingangsfluid und dem Ausgangsfluid selbst kompliziert anzubringen ist. Die Thermoventile bekannter Art sind überdies wenig geeignet, das Problem zu lösen, die Erwärmung der Scheibenwaschflüssigkeit zu ermöglichen, indem Flüssigkeit des Fahrzeugkühlers benutzt wird.

Die Aufgabe der vorliegenden Erfindung ist daher, die Nachteile bekannter Thermoventile und insbesondere jene der oben beschriebenen zu vermeiden, und ein Thermoventil vorzuschlagen, das schneller reagiert, kleinere Abmessungen besitzt und gegenüber den dem Stand der Technik angehörenden Thermoventilen leichter und auch zuverlässiger ausgeführt ist.

Eine weitere Aufgabe besteht darin, ein Thermoventil mit einer derartigen Struktur zu gestalten, dass eine rasche und wirtschaftliche Montage für den Zusammenbau des Ventils selbst möglich gemacht wird.

Diese Aufgaben werden durch ein Thermoventil mit dem Merkmalen des kennzeichnenden Teils des Anspruchs 1 gelöst.

Es wird somit vorgeschlagen, ein Thermoventil herzustellen, das auf bekannte Art und Weise aus einem Gehäuse und einem aus dem Gehäuse ausgenommenen Sitz besteht, der den Verschluss verstellbar aufnimmt. Eingangs-/Ausgangsleitungen sind mit dem Sitz des Verschlusses verbunden. In diesem ist der Verschluss in einer ersten Position durch ein erstes Federelement gehalten, das zwischen dem Verschluss und einem der Böden des Gehäuses zwischengeschaltet ist, um den Sitz mit einer der Eingangs-/Ausgangsleitungen in einer ersten Position zu verbinden und in einer zweiten Position den Fluidfluss zwischen dem Sitz und den Eingangs-/Ausgangsleitungen zu unterbinden. Ein zweites Federelement ist zwischen dem Verschluss und dem zweiten Gehäuseboden angeordnet, wobei der Wirkung des ersten Federelementes entgegengewirkt wird. Das erste Federelement besteht aus einem Material wie zum Beispiel SMA (Shape Memory Alloy, eine Formgedächtnislegierung in Abhängigkeit der Temperatur), derart dass es Abänderungen von Merkmalen und/oder der Form bei Temperaturänderung des Fluids unterliegt, in dem es eingetaucht ist.

Erfindungsgemäß weist das Gehäuse eine hohe Wärmeübertragungszahl auf, die durch die Ausbildung und/oder durch das Material einer der Seiten der Eingangs-/Ausgangsleitungen gegeben werden kann, um das den Temperaturunterschied fühlende Federelement aufzunehmen.

Vorteilhafterweise verjüngt sich der das Federelement aufnehmende Sitz von einem Fortsatz des Gehäuses. Der Fortsatz ist bevorzugter Weise der Art bemessen, dass der Kolben im vollständig unbelasteten Zustand des Federelementes vollständig aufgenommen wird.

Erfindungsgemäß ist das Gehäuse aus zwei miteinander kuppelbaren Bestandteilen zusammengesetzt, von denen jeder einen Anschlussstutzen an den zueinander parallelen Eingangs-/Ausgangsleitungen aufweist. Die Stutzen sind bevorzugt mit zueinander parallelen und zur Längsachse des Sitzes senkrechten Achsen angeordnet, in den die Stutzen einmünden. Einer der Bestandteile weist bevorzugt den Fortsatz bzw. die Verlängerung mit einer mit der Achse des Sitzes zusammenfallenden Achse auf. Erfindungsgemäß weist der den Fortsatz aufweisende Bestandteil, auf der anderen Seite gegenüber des Fortsatzes bezüglich der Stutzenachse, einen offenen Rohrabschnitt auf, der mit einem radialen Kragen versehen ist. Der zweite Bestandteil hat bevorzugt einen Rohrabschnitt, auf den formschlüssig der Kragen des ersten Bestandteils aufgeschoben werden kann.

Um die beiden Rohrabschnitte miteinander stabil zu befestigen, weist der Kragen des ersten Bestandteiles in seinem Umfang zwei zueinander diametral entgegengesetzte Öffnungen auf, die jeweils in eine Hinterschneidung übergehen. Die Hinterschneidungen sind zueinander gleichgerichtet. Der Rohrabschnitt des zweiten Bestandteiles ist hingegen mit zweien gleichgerichteten Klauen versehen, die radial von der Außenfläche des Rohrabschnittes und in einer Position vorspringen, die den Öffnungen des ersten Bestandteiles entspricht, und in Richtung des Rohrumfangs abgewinkelt sind, wobei diese Position einem Drehwinkel der Klauen entspricht, die an den entsprechenden Hinterschneidungen anschlagen, um die Achsen der beiden Stutzen in derselben Ebene anzuordnen . Bevorzugter Weise hat jede Hinterschneidung eine derartige Ausbildung, dass jede Klaue des Rohrabschnittes des ersten Bestandteiles schnappartig aufgenommen wird.

Um die Struktur des Thermoventils leichter zu gestalten, ist der Kolben hohl ausgebildet, bevorzugter Weise in der Form einer Hülse, deren ein Ende einen Sitz aufweist, um eines der Enden der ersten Feder aufzunehmen, und das zweite Ende einen Sitz aufweist, um eines der Enden der zweiten Feder aufzunehmen.

Weitere Merkmale und Einzelheiten des erfindungsgemäßen Thermoventils gehen aus den Patentansprüchen und aus der folgenden Beschreibung einer bevorzugten, nicht begrenzender Weise, sondern nur beispielsweise dargestellten Ausführungsform in der beigefügten Zeichnung hervor. Es zeigen,

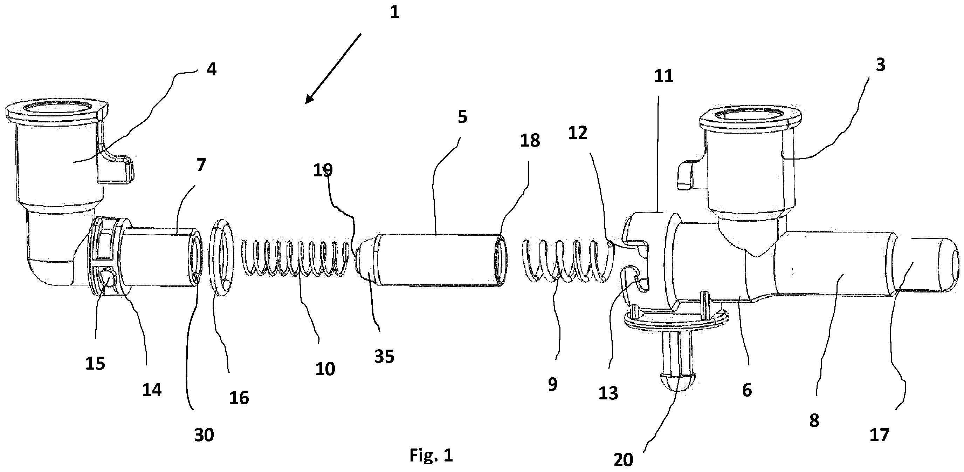

- Figur 1: eine schematisches Explosionsschaubild eines erfindungsgemäßen Thermoventils,

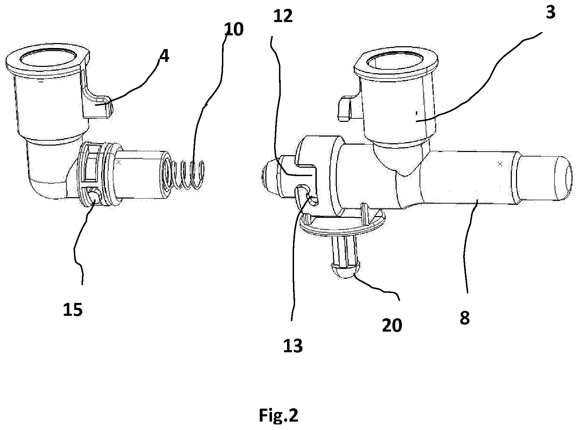

- Figur 2: ein teilweises Explosionsschaubild vor des Zusammenbaus beiden Bestandteilen,
- Figur 3: ein Schaubild des Thermoventils aus Figur 1 beim gegenseitigen Aufschub zwischen den beiden Bestandteilen in axialer Richtung,
- Figur 4: ein Schaubild des Thermoventil aus Figur 1 beim gegenseitigen Einhaken zwischen den zwei Bestandteilen in axialer Richtung, und
- Figur 5: ein Schaubild des Thermoventils aus Figur 1 im vollständig zusammengebauten Zustand.

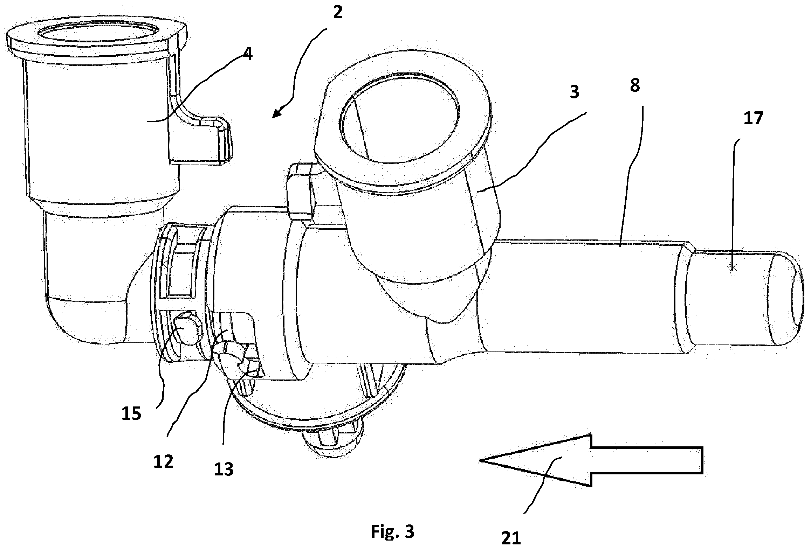

In den Figuren ist mit der Bezugsziffer 1 insgesamt ein erfindungsgemäßes Thermoventil angegeben. Das Thermoventil 1 besitzt in der Figur 3 ein Gehäuse 2, das mit einem Eingangsstutzen 3 und einem Ausgangstutzen 4 versehen ist, die mittels eines Verschlusses in der Form eines Kolbens 5 miteinander verbindbar und unterbrechbar sind.

Das Gehäuse 2 besteht aus einem ersten Bestandteil 6 und einem zweiten Bestandteil 7. Der erste Bestandteil 6 weist den Eingangsstutzen 3 auf, der eine zur Achse des Gehäuses 2 senkrechte Achse besitzt. Der zweite Bestandteil 7 weist den Ausgangsstutzen 4 auf, der gleichfalls eine zur Achse des Gehäuses 2 senkrechte Achse besitzt.

Der erste Bestandteil 6 erstreckt sich in einen hohlen Fortsatz 8. In diesen sind der Kolben 5 und eine Temperaturunterschiede fühlende Feder 9 aufgenommen, die zwischen dem Fortsatzboden 8, der eine hohe Wärmeübertragungszahl aufweisen kann, und einem der Enden des Kolbens 5 angeordnet ist. Am anderen Ende des Kolbens 5 wirkt eine Feder 10, die am anderen Ende am Boden des zweiten Bestandteils 7 eingebracht ist.

Vorteilhafterweise ist das zweite Ende des Kolbens 5 als Kegelstumpf 35 ausgebildet. Die Öffnung des dem ersten Bestandteil 6 gegenüberliegenden zweiten Bestandteils weist einen geneigten Rand 30 auf, um eine verbesserte Kupplung zu gewährleisten und den Fluidfluss besser zu unterbinden.

Der erste Bestandteil 6 geht im Bereich seiner axialen Öffnung in einen Kragen 11 über. Der Kragen 11 weist zwei auf seinem Umfang diametral gegenüberliegende Öffnungen 12 auf, die jeweils in einer Hinterschneidung 13 mit Endanschlag einmünden.

Der zweite Bestandteil 7 weist hingegen einen Anschlag 14 am Ende seines Rohrabschnittes und im Bereich seiner axialen Öffnung am Rohrumfang zwei einander gegenüberliegende Klauen 15 auf, die in den Hinterschneidungen 13 bis zum Anschlag mit Drehung der beiden Bestandteile 6 und 7 zueinander eingreifen, sobald sich die Achsen der Stutzen 3 und 4 in derselben Ebene und zueinander parallel befinden.

Zweckmäßigerweise kann am Anschlag 14 ein als Dichtung ausgebildeter Spannring 16 aufliegen.

Der Fortsatz 8 verjüngt sich zu einer Aufnahme/Verlängerung 17, die eine hohe Wärmeübertragungszahl zur Aufnahme der Feder 9 aufweisen kann.

Der Kolben 5 kann zur Verringerung seines Materials als Büchse mit einer Öffnungsseite ausgebildet sein, die einen Bund 18 zur Auflage des anderen Endes der Feder 9 aufweist.

Der Kolben 5 weist überdies im Bereich seines dem Bestandteil 7 zugewandten Endes eine Ringstufe 19 für die Auflage der Feder 10 auf, der am anderen Ende im Rohrabschnitt des Bestandteils 7 eingesteckt ist.

Auf bekannter Art und Weise ist das Thermoventil 1 mit einem Ansatz 20 für dessen Befestigung am gewünschten Ort versehen.

Der Zusammenbau des erfindungsgemäßen Thermoventils erfolgt wie nachstehend beschrieben.

Nachdem der Spannring 16 am Anschlag 14 angeordnet wurde, wird die Feder 10 in den Bestandteil 7 gesteckt.

Die Feder 9 wird in den Bestandteil 6 eingebracht. Der Kolben 5 wird mit seinem Bund 18 auf eines der Enden der Feder 9 innerhalb des Bestandteiles 6 zum Aufliegen gebracht.

Der Bestandteil 7 und die Feder 10 werden mit dem Kolben 5 ausgerichtet. Die Feder 10 wird auf der Stufe 19 ausgerichtet aufgelegt.

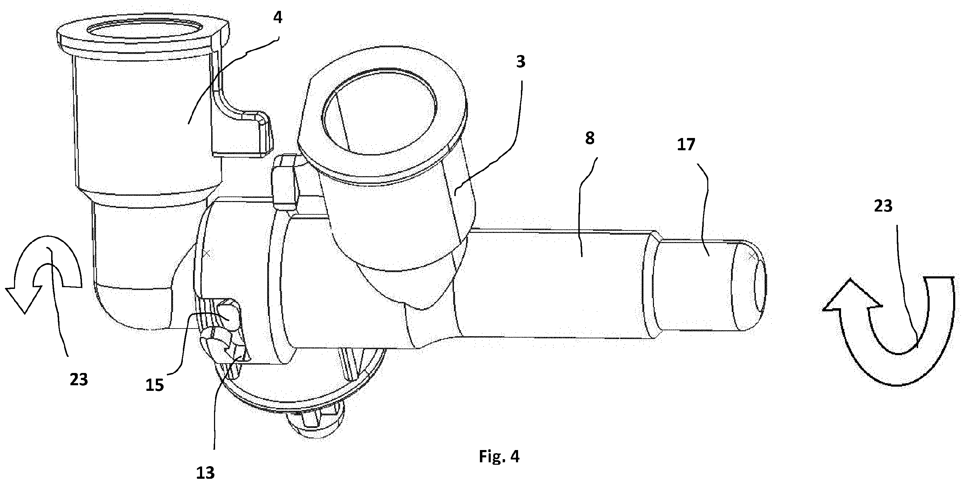

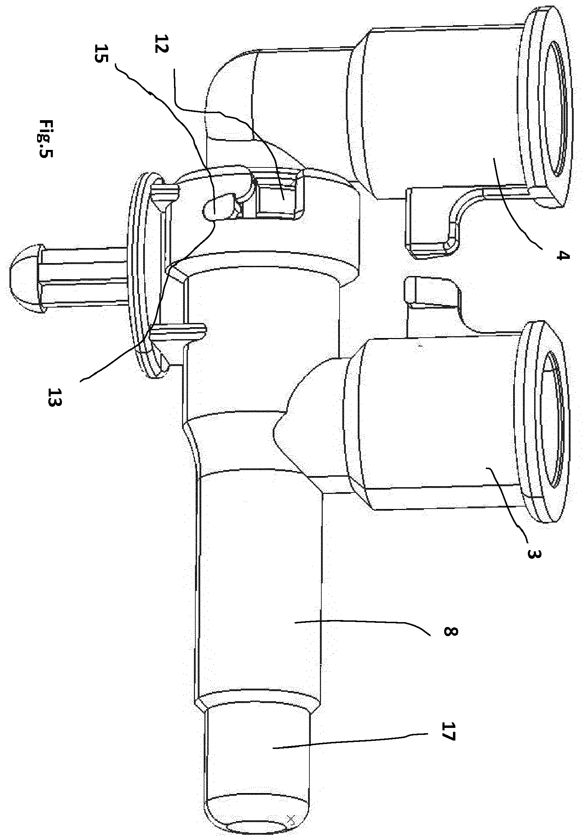

Nach dem Aufschieben des Kragens 11 immer in Richtung des Pfeils 21 aus Figur 3 unter Zusammendrücken der Feder 10 und der Feder 9 werden die Klauen 15 solange gedreht, bis sie mit der Öffnungen 12 des Kragens 11 ausgerichtet sind. Nach dieser Bewegung werden die Klauen 15 oberhalb der Hinterschneidungen gebracht und nach einer Drehung in die Gegenrichtung der Bestandteile 6 und 7 gemäß der Pfeile 23 aus Figur 4 werden die Klauen 15 innerhalb der Hinterschneidungen 13 zum Einschnappen gebracht, wodurch auf diese Weise eine stabile und feste Klemmung zwischen den beiden Bestandteilen mit den beiden Stutzen 3 und 4 erhalten wird, die zueinander parallel und in derselben Ebene angeordnet sind, wobei der vollständig zusammengebaute Zustand gemäß Figur 5 erreicht wird.

Es ist klar, dass der Kolben 5 und die Federn 9, 10 derart bemessen sind, dass die von der Verlängerung/Aufnahme 17 aufgenommene Feder 9 bei einer konventionellen Temperatur unbelastet ist und sich der durch die andere Feder belastete Kolben in einer Position befindet, die den Durchfluss von Fluid zwischen dem Eingangsstutzen und dem Ausgangsstutzen frei lässt. Sobald die thermosensible Feder 9 in der Verlängerung/Aufnahme 17 durch Temperaturänderungen eine Erhöhung/Abnahme der Temperatur des Fluids fühlt, in dem sie und insbesondere die Verlängerung/Aufnahme 17 eingetaucht ist, wird der Kolben 5 solange verstellt, bis er den Durchfluss zwischen den beiden Stutzen 3,4, jenem am Eingang und jenem am Ausgang, vollständig unterbindet. Gleichzeitig wird die Widerstandsfeder 10 im zweiten Bestandteil zusammengedrückt. Die Feder 10 wirkt ihrerseits auf den Kolben, um ihn zu verstellen sobald die thermosensible Feder aufgrund der Temperaturänderung ihre elastischen Merkmale und/oder Abmessungen ändert.

Es ist zu bemerken, dass ein so ausgebildetes Thermoventil geeignet ist, um in einem Flüssigkeitsbehälter der Scheibenwaschanlage angeordnet zu werden und zum Beispiel mit einem Fahrzeugkühler verbunden zu werden, wobei die Warmflüssigkeit von einem Kühler durch das Thermoventil geleitet wird, das, wenn es unterbrochen ist, die Warmflüssigkeit dazu zwingt, sich in der Eingangsleitung des Thermoventils aufzuhalten. Wenn überdies mindestens eine Leitung als Serpentine ausgeführt ist, so ist die Warmflüssigkeit im Stande, die Flüssigkeit zu erhitzen, in der das Thermoventil eingetaucht ist. Die Verwendung der Scheibenwaschflüssigkeit ist daher besonders vorteilhaft im Winter, um die Scheiben vom Eis zu befreien.

Als Material des Gehäuses und des Kolbens wird die Verwendung von Thermoplast bevorzugt, wie zum Beispiel Polyamid, das sich einfach spritzgießen lässt.

Die Verwendung des vorliegenden Thermoventils führt zu weiteren Vorteilen, wenn es mittels eines Anschlusses befestigt wird, der die Drehung der beiden Bestandteile arretiert.

Es ist schließlich klar, dass am bisher beschriebenen Thermoventil für den Fachmann naheliegende Ergänzungen, Abänderungen oder Varianten vorgenommen werden können, ohne dabei den Schutzbereich der beigefügten Patentansprüche zu verlassen.

### Liste der Bezugsziffer

- 1.: Thermoventil
- 2.: Gehäuse
- 3.: Eingangsstutzen
- 4.: Ausgangstutzen
- 5.: Verschluss- Kolben
- 6.: erster Bestandteil
- 7.: zweiter Bestandteil
- 8.: hohler Fortsatz
- 9.: thermosensible Feder
- 10.: Widerstandsfeder
- 11.: Kragen
- 12.: Öffnung
- 13.: Hinterschneidung
- 14.: Anschlag
- 15.: Klaue
- 16.: Spannring/Dichtung
- 17.: Aufnahme/Verlängerung
- 18.: Bund
- 19.: Stufe
- 20.: Ansatz
- 21.: Pfeil lineare Bewegung
- 23.: Pfeile Drehbewegung
- 30.: geneigter Rand
- 35.: kegelförmiger Kolbenabschnitt

## Patentansprüche

1. Thermoventil (1) bestehend aus einem Gehäuse (2), aus einem Verschluss (5) und einem aus dem Gehäuse (2) ausgenommenen, den Verschluss (5) verstellbar aufnehmenden Sitz, wobei Eingangs-/Ausgangsleitungen (3,4) mit dem Sitz des Verschlusses verbunden sind, wobei der Verschluss (5) in einer ersten Position durch ein erstes Federelement (9) gehalten ist, das zwischen dem Verschluss (5) und einem der Böden des Gehäuses (2) zwischengeschaltet ist, um den Sitz mit einer der Eingangs-/Ausgangsleitungen (3, 4) in einer ersten Position zu verbinden und in einer zweiten Position den Fluidfluss zwischen dem Sitz und den Eingangs-/Ausgangsleitungen (3, 4) zu unterbinden, wobei ein zweites dem ersten Federelement entgegenwirkendes Federelement (10) zwischen dem Verschluss (5) und dem zweiten Gehäuseboden (2) angeordnet ist, wobei das erste Federelement (9) aus einem Material derart besteht, dass es für Temperaturänderungen des Fluids sensibel ist, in dem das Thermoventil (1) eingetaucht ist, **dadurch gekennzeichnet, dass** das Gehäuse (2) sich in eine Aufnahme (17) und/oder Verlängerung (8) mit hoher Wärmeübertragungszahl von einer der Seiten der Eingangs-/Ausgangsleitungen (3, 4) erstreckt, um das den Temperaturunterschied (9) fühlende Federelement aufzunehmen und dass
das Gehäuse (2) aus zwei miteinander kuppelbaren Bestandteilen (6, 7) zusammengesetzt ist, von denen jeder der Bestandteile (6, 7) einen Anschlussstutzen (3, 4) an den zueinander parallelen Eingangs-/Ausgangsleitungen aufweist und ferner **dadurch gekennzeichnet, dass** der erste die Verlängerung (8) aufweisende Bestandteil (6) auf der anderen Seite gegenüber der Verlängerung (8) bezüglich der Stutzenachse (3), einen offenen Rohrabschnitt aufweist, der mit einem radialen Kragen (11) versehen ist, der in seinem Umfang zwei zueinander diametral entgegengesetzte Öffnungen (12) aufweist, die jeweils in eine Hinterschneidung (13) übergehen, wobei die Hinterschneidungen (13) zueinander gleichgerichtet sind, wobei der Rohrabschnitt des zweiten Bestandteiles (7) mit zwei voneinander diametral entgegen gerichteten Klauen (15) versehen ist, die radial von der Außenfläche des Rohrabschnittes in einer Position vorspringen, die den Öffnungen (12) des ersten Bestandteiles entspricht, die zwischen den beiden Achsen der zwei Bestandteile (6, 7) und in Richtung des Rohrumfangs abgewinkelt sind und wobei diese Position einem Drehwinkel der Klauen (15) entspricht, wenn diese an den entsprechenden Hinterschneidungen anschlagen, um die beiden Anschlussstutzen (3, 4) mit ihren Achsen in derselben Ebene anzuordnen.

2. Thermoventil nach Anspruch 1, **dadurch gekennzeichnet, dass** sich die das erste Federelement aufnehmende Aufnahme (17) von der Verlängerung (8) des Gehäuses (2) verjüngt, wobei die Verlängerung (8) derart bemessen ist, das s der Verschluss (5) im vollständig unbelasteten Zustand des ersten Federelementes (9) vollständig aufgenommen wird.

3. Thermoventil nach Anspruch 1, **dadurch gekennzeichnet, dass** die Anschlussstutzen (3, 4) mit zueinander parallelen und zur Längsachse der Aufnahme senkrechten Achsen angeordnet sind, in die die Stutzen (3, 4) einmünden, wobei einer der Bestandteile (6, 7) den Verlängerung (8) mit einer mit der Achse der Aufnahme (17) zusammenfallenden Achse aufweist.

4. Thermoventil nach Anspruch 1, wobei der zweite Bestandteil (7) einen Rohrabschnitt aufweist, auf den formschlüssig der Kragen (11) des ersten Bestandteils (6) aufgeschoben wird.

5. Thermoventil nach Anspruch 1, **dadurch gekennzeichnet, dass** jede Hinterschneidung (13) eine derartige Ausbildung aufweist, dass jede Klaue des Rohrabschnittes des zweiten Bestandteiles schnappartig aufgenommen wird.

## Claims

1. A thermal valve (1) consisting of a hollow body (2), a shut-off member (5), a seat formed by the body (2) and displaceably receiving the shut-off member (5), inlet/outlet lines (3, 4) communicating with the seat, the shut-off member (5) being kept in a first position by a first elastic member (9) which is interposed between the shut-off member (5) and one of the bottoms of the hollow body (2), to connect the seat with one of the inlet/outlet lines (3, 4) and shut off in a second position the fluid flow between the seat and the inlet/outlet lines (3, 4), a second elastic member (10) being disposed between the shut-off member (5) and the second bottom of the hollow body (2), against the action of the first elastic member, the first elastic member (9) being made of a material that is sensitive to temperature variations in the fluid in which the valve (1) is immersed, **characterized in that** the hollow body (2) extends into a seat (17) and/or extension (8) with a high heat-transfer coefficient from one of the sides of the inlet/outlet lines (3, 4) to receive the temperature-gradient sensitive elastic member (9), the hollow body (2) being composed of two parts (6, 7) that can be coupled together, each of the parts (6, 7) having a union (3, 4) for connection to the parallel inlet/outlet lines, and further **characterized in that** the first extension (8) from the axis of the union (3), has an open tubular portion equipped with a radial collar (11), which has two diametrically opposite openings (12) in its perimeter, fitting into respective undercuts (13), the undercuts (13) being mutually aligned, the tubular portion of the second part (7) having two diametrically opposed teeth (15) which radially project out of the outer surface of the tubular portion in a position that corresponds to the openings (12) of the first part and are angled between the axes of the two parts (6, 7) and in the direction of the periphery of the pipe whereby this position corresponds to an angle of rotation of the teeth (15) if the latter abut their respective undercuts, to orient their axes in the same plane.

2. A thermal valve as claimed in claim 1, **characterized in that** the seat (17) that receives the first elastic member (9) tapers from the extension (8) of the hollow body (2), the extension (8) having such a size as to entirely accommodate the shut-off member when the elastic member (9) is fully unloaded.

3. A thermal valve as claimed in claim 3, **characterized in that** the unions (3, 4) extend along parallel axes, perpendicular to the longitudinal axis of the cavity in which the unions open out, one of the parts having the extension (8) with an axis coinciding with the axis of the cavity.

4. A thermal valve as claimed in claim 1, wherein the second part (7) has a tubular portion upon which the collar (11) of the first part (6) geometrically fits.

5. A thermal valve as claimed in claim 1, **characterized in that** each undercut (13) has such a shape as to snap-fittedly receive each tooth of the tubular portion of the second part.

## Revendications

1. Vanne thermique (1) constituée d'un corps creux (2), un obturateur (5), un siège formé par le corps (2) et recevant de façon mobile l'obturateur (5), des conduites d'entrée/sortie (3, 4) en communication avec le siège, l'obturateur (5) étant maintenu dans une première position par un premier élément élastique (9), interposé entre l'obturateur (5) et l'un des fonds du corps creux (2), pour relier le siège à l'une des conduites d'entrée/sortie (3, 4) et obturer dans une seconde position l'écoulement de fluide entre le siège et les conduites d'entrée/sortie (3, 4), un deuxième élément élastique (10) étant agencé entre l'obturateur (5) et le second fond du corps creux (2), contre l'action du premier élément élastique, le premier élément élastique (9) étant constitué d'une matière sensible aux variations de température dans le fluide dans lequel est plongé la vanne (1), **caractérisée en ce que** le corps creux (2) s'étend dans un siège (17) et/ou un prolongement (8) avec un coefficient de transmission de chaleur élevé de l'un des côtés des conduites d'entrée/sortie (3, 4) pour recevoir l'élément élastique sensible au gradient de température (9), le corps creux (2) étant composé de deux pièces (6, 7) pouvant être accouplées l'une à l'autre, chacune des pièces (6, 7) possédant un raccord (3, 4) pour se relier aux conduites d'entrée/sortie parallèles, et également **caractérisée en ce que** le premier prolongement (8) par rapport à l'axe du raccord (3) comporte une partie tubulaire ouverte munie d'un collier radial (11), possédant deux ouvertures diamétralement opposées (12) dans son périmètre, s'insérant dans des contre-dépouilles (13) respectives, les contre-dépouilles (13) étant alignés l'un à l'autre, la partie tubulaire de la seconde pièce (7) possédant deux dents diamétralement opposées (15), faisant saillie de la surface extérieure de la partie tubulaire dans une position correspondant aux ouvertures (12) de la première pièce et inclinées entre les axes des deux parties (6, 7) vers le périmètre du tuyau, cette position correspondant à un angle de rotation des dents (15) si celles-ci viennent en butée sur les contre-dépouilles respectifs, pour orienter leurs axes dans le même plan.

2. Vanne thermique selon la revendication 1, **caractérisée en ce que** le siège (17) recevant le premier élément élastique (9) s'effile à partir du prolongement (8) du corps creux (2), le prolongement (8) étant dimensionné pour accueillir entièrement l'obturateur lorsque l'élément élastique (9) est complètement déchargé.

3. Vanne thermique selon la revendication 3, **caractérisée en ce que** les raccords (3, 4) s'étendent e long d'axes parallèles, perpendiculairement à l'axe longitudinal de la cavité dans laquelle les raccords débouchent, une des pièces comportant le prolongement (8) avec un axe coïncidant avec l'axe de la cavité.

4. Vanne thermique selon la revendication 1, dans laquelle la seconde pièce (7) comporte une partie tubulaire sur laquelle le collier (11) de la première partie (6) s'emboîte géométriquement.

5. Vanne thermique selon la revendication 1, **caractérisée en ce que** chaque contre-dépouille (13) a une forme qui permet de recevoir par encliquetage chaque dent de la partie tubulaire de la deuxième pièce.
